# FASCICULE DE BREVET EUROPEEN

(11) **EP 2 155 531 B1**
(45) Date de publication et mention de la délivrance du brevet: **12.01.2011**
(21) Numéro de dépôt: 08788053.0
(22) Date de dépôt: 26.03.2008
(51) Int. Cl.: B62D 1/184, F16B 2/16

(54) **DISPOSITIF DE SERRAGE ELECTRIQUE D'UNE COLONNE DE DIRECTION REGLABLE DE VEHICULE AUTOMOBILE**
ELEKTRISCHE KLEMMVORRICHTUNG FÜR EINE EINSTELLBARE MOTORFAHRZEUG-LENKSÄULE
ELECTRIC CLAMPING DEVICE FOR AN ADJUSTABLE MOTOR VEHICLE STEERING COLUMN

(30) Priorité: 12.06.2007 FR 0704229
(43) Date de publication de la demande: 24.02.2010
(73) Titulaire: ZF Systemes de Direction Nacam, S.A.S., 41100 Vendome (FR)
(72) Inventeur: BERTET, Nicolas, 37100 Tours (FR); EYMERY, Vincent, F-41310 Saint Amand Longpre (FR)
(74) Mandataire: Bloch & Bonnétat
(86) Numéro de dépôt international: PCT/FR2008/050527
(87) Numéro de publication internationale: WO 2008/152253

(56) Documents cités:
- EP-A- 1 375 296
- WO-A-2004/069629
- WO-A-2007/039197
- US-A1- 2003 221 505

## Description

La présente invention se rapporte à un dispositif de serrage électrique, qui se monte sur une colonne de direction de véhicule automobile.

Le dispositif selon l'invention s'applique à une colonne de direction réglable en profondeur et en hauteur, ou bien à une colonne de direction réglable soit en profondeur soit en hauteur, dont l'arbre de direction est monté dans un tube corps, qui est supporté et bloqué sur la structure du véhicule à la position voulue. La colonne de direction comporte un arbre de direction monté tournant dans le tube corps, qui est raccordé à un ensemble support fixé au châssis du véhicule ou à un élément de la carrosserie.

WO-A-2007/039197 décrit un dispositif de serrage d'une colonne de direction réglable comportant un ensemble de blocage, appartenant au système de serrage et monté sur la tige de serrage, qui consiste en une came fixe en rotation par rapport à l'axe de serrage, une came mobile en rotation et au moins un élément roulant disposé entre la came fixe et la came mobile l'élément roulant, ou chaque élément roulant se déplaçant sur un chemin de roulement fixe aménagé sur la came fixe, et sur un chemin de roulement mobile aménagé sur la came mobile, chaque chemin de roulement a une pente de dégagement de l'élément roulant par rapport à la came correspondante, de manière qu'en tournant la came mobile par rapport à la came fixe, les deux cames s'écartent ou se rapprochent l'une de l'autre suivant le sens de rotation, afin d'obtenir la position verrouillée ou déverrouillée de la colonne de direction, ladite pente de dégagement des chemins de roulement a une valeur variable inférieure à la valeur liée au coefficient de frottement avec l'élément roulant, le déplacement axial de la came mobile par rapport à la came fixe étant fonction de la rotation de la came mobile et dépendant à chaque instant de la position de l'élément roulant ou des éléments roulants par rapport à l'axe de serrage et de la pente de dégagement des chemins de roulement pour ladite position.

La plupart des colonnes de direction réglables de véhicule automobile sont munies d'un levier de manoeuvre, dont la rotation dans un sens ou dans l'autre permet d'obtenir la position verrouillée et la position déverrouillée de la colonne de direction. Ces dispositifs connus présentent l'inconvénient d'avoir un encombrement dangereux du fait de la présence d'une poignée de commande, qui a un débattement en rotation limité, ce qui engendre une course de serrage et de desserrage relativement faible. De plus cette poignée de commande se trouve généralement dans la zone du genou du conducteur lors d'un choc.

Le but de la présente invention est de proposer un dispositif de serrage électrique d'un tube corps d'une colonne de direction, qui ne présente pas les inconvénients décrits ci-dessus, c'est-à-dire que le dispositif de serrage électrique de l'invention permette d'obtenir la course de serrage et de desserrage demandée, tout en ayant un encombrement relativement réduit qui ne présente pas de risque pour le conducteur en cas de choc.

L'invention se rapporte à un dispositif de serrage électrique d'une colonne de direction réglable en profondeur et/ou en hauteur de véhicule automobile, qui comporte un arbre de direction monté tournant autour d'un axe de direction dans un tube-corps. Ladite colonne de direction est montée dans un ensemble support comportant un élément support fixe constitué par deux montants et un élément de raccordement et un élément support mobile. Ledit tube-corps est disposé dans l'élément support mobile et bloqué sur l'élément support fixe, en position verrouillée, par un système de serrage selon un axe de serrage sensiblement perpendiculaire au plan vertical de direction passant par l'axe de direction. Ledit système de serrage a une tige de serrage dont l'axe est l'axe de serrage et qui traverse les deux montants de l'élément support fixe.

Ledit dispositif de serrage électrique comporte un ensemble de blocage, appartenant au système de serrage et monté sur la tige de serrage, qui consiste en une came fixe en rotation par rapport à l'axe de serrage, une came mobile en rotation et au moins un élément roulant disposé entre la came fixe et la came mobile.

L'élément roulant, ou chaque élément roulant se déplace sur un chemin de roulement fixe aménagé sur la came fixe, et sur un chemin de roulement mobile aménagé sur la came mobile. Chaque chemin de roulement a une pente de dégagement de l'élément roulant par rapport à la came correspondante ; de manière qu'en tournant la came mobile par rapport à la came fixe, les deux cames s'écartent ou se rapprochent l'une de l'autre suivant le sens de rotation, afin d'obtenir la position verrouillée ou déverrouillée de la colonne de direction.

Ladite pente de dégagement des chemins de roulement a une valeur variable inférieure à la valeur liée au coefficient de frottement avec l'élément roulant. Chaque chemin de roulement est une courbe qui possède un rayon variable par rapport à l'axe de serrage, de manière qu'en tournant la came mobile par rapport à la came fixe, un ou plusieurs chemins de roulement n'interfèrent jamais avec lui-même ou avec les autres chemins de roulement ; le déplacement axial de la came mobile par rapport à la came fixe est fonction de la rotation de la came mobile, et dépend à chaque instant de la position de l'élément roulant ou des éléments roulants par rapport à l'axe de serrage et de la pente de dégagement des chemins de roulement pour ladite position.

Avantageusement l'ensemble de blocage peut comporter deux ou trois éléments roulants, chaque élément roulant se déplaçant sur un chemin de roulement fixe et sur un chemin de roulement mobile correspondants.

Le ou les éléments roulants sont maintenus en place par une cage et sont de préférence des billes. De plus un élément d'amortissement est disposé dans un logement aménagé à l'extrémité périphérique de chacun des chemins de roulement fixes et de chacun des chemins de roulement mobiles.

Selon l'invention, ledit dispositif de serrage électrique est monté dans un carter qui supporte un actionneur électrique, et qui comporte : un système de transmission, l'ensemble de blocage et la tige de serrage qui traverse les deux montants de l'élément support fixe. L'actionneur électrique est un moteur électrique dont l'axe est disposé dans un plan perpendiculaire à l'axe de serrage et parallèle au plan vertical de direction.

Le système de transmission comprend une roue et une vis sans fin montés dans le carter, la vis sans fin étant entrainée par le moteur électrique et s'engrenant avec la roue solidaire de la came mobile montée sur la tige de serrage. L'arbre du moteur électrique qui entraîne la vis sans fin, est supporté à son extrémité par un palier autolubrifiant disposé dans le carter. De plus le carter comporte une butée plastique disposée à l'extrémité de l'arbre moteur.

L'ensemble de blocage comporte la came mobile, la cage et la came fixe, qui sont disposées dans le carter, et qui sont montées sur la tige de serrage, la roue étant montée sur un moyeu de la came mobile et solidaire du moyeu en rotation par l'agencement de méplats. La tige de serrage est supportée à son extrémité par un palier autolubrifiant disposé dans le carter. Une butée à aiguilles est disposée sur l'extrémité de la tige de serrage, ladite butée à aiguilles s'appliquant contre une face externe du carter, et étant maintenue en place par un élément de tenue axiale constitué par une tête agencée sur la tige de serrage. Enfin un ressort de rappel est monté sur la tige de serrage entre la came fixe et l'élément support mobile afin d'assurer la mise en contrainte du dispositif.

Ainsi le système de serrage comporte la tige de serrage sur laquelle sont montés la butée à aiguilles, l'ensemble de blocage, le ressort de rappel et un élément de tenue axiale. La butée à aiguilles est disposée entre la tête de la tige de serrage et le carter. L'ensemble de blocage est disposé dans le carter et contre la face externe d'un montant de l'élément support fixe. Le ressort de rappel est disposé entre la came fixe de l'ensemble de blocage et l'élément support mobile. L'élément de tenue axiale est constitué par un écrou monté sur l'extrémité filetée de la tige de serrage, et il s'applique contre la face externe de l'autre montant de l'élément support fixe. La tige de serrage a deux méplats qui coopèrent avec la largeur du trou oblong aménagé dans ledit montant pour le réglage en hauteur.

Afin d'assurer le maintien en position de la colonne de direction, la came fixe comporte deux crémaillères radiales mobiles en hauteur et deux crémaillères axiales fixes. Les deux crémaillères radiales mobiles coopèrent avec deux crémaillères radiales fixes agencées sur les montants d'un cadre logé dans le montant de l'élément support fixe. Les deux crémaillères axiales fixes coopèrent avec deux crémaillères axiales mobiles agencées sur un montant de l'élément support mobile. Les deux crémaillères radiales mobiles sont disposées dans le fond de deux encoches de la came fixe qui reçoivent les deux montants du cadre ; et un patin en plastique est fixé dans ledit cadre pour faciliter le coulissement.

Le dispositif de serrage électrique d'une colonne de direction de véhicule automobile selon l'invention présente ainsi l'avantage d'obtenir une course de serrage et de desserrage plus importante en fonction de la rotation de commande qui peut être beaucoup plus élevée que les systèmes connus, et ceci tout en garantissant un roulement sans glissement des éléments roulants. De plus le dispositif de l'invention permet de libérer complètement la zone d'impact avec le genou en cas de choc. Enfin le dispositif de serrage électrique de l'invention peut se monter dans un encombrement similaire d'un véhicule automobile existant.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est une vue éclatée en perspective des différents éléments du dispositif de serrage électrique selon l'invention d'une colonne de direction, dont seul est représenté l'élément support fixe ;
- la figure 2 est une vue agrandie de la figure 1, sans le moteur électrique et avec un seul montant de l'élément support fixe ;
- la figure 3 est une coupe suivant le plan III-III de la figure 1, les différents éléments étant assemblés ;
- la figure 4 est une coupe suivant le plan IV-IV de la figure 2, les différents éléments étant assemblés sur l'élément support fixe ;
- la figure 5 est une vue en perspective de la came mobile ;
- la figure 6 est une vue suivant VI de la figure 5 ;
- la figure 7 est une coupe suivant le plan VII-VII de la figure 6 ;
- la figure 8 est une vue similaire à la figure 6 avec les bille et la cage ;
- la figure 9 est une vue en perspective de la came fixe, du côté des chemins de roulement fixes ;
- la figure 10 est une vue en perspective de la came fixe, du côté des crémaillères ;
- la figure 11 est une vue suivant XI de la figure 9 ;
- la figure 12 est une vue suivant XII de la figure 10.

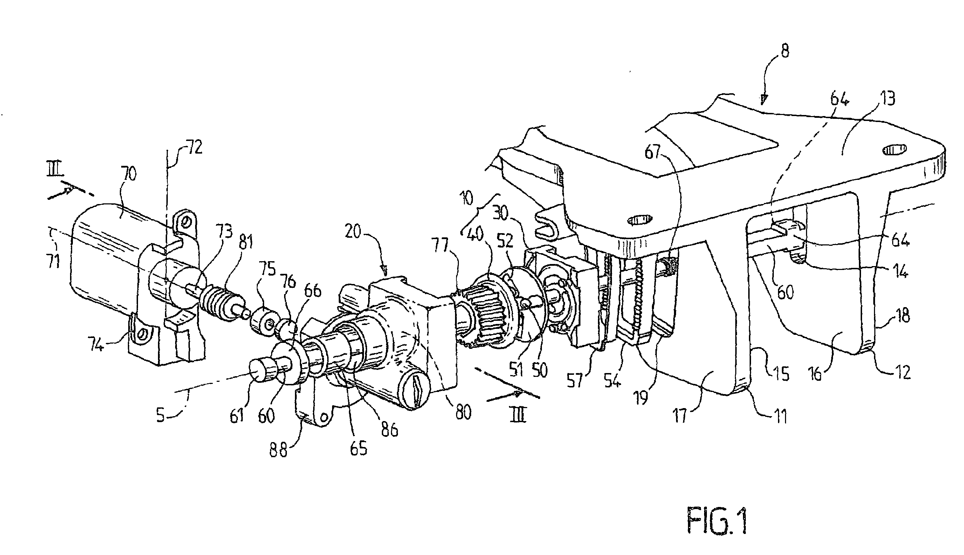

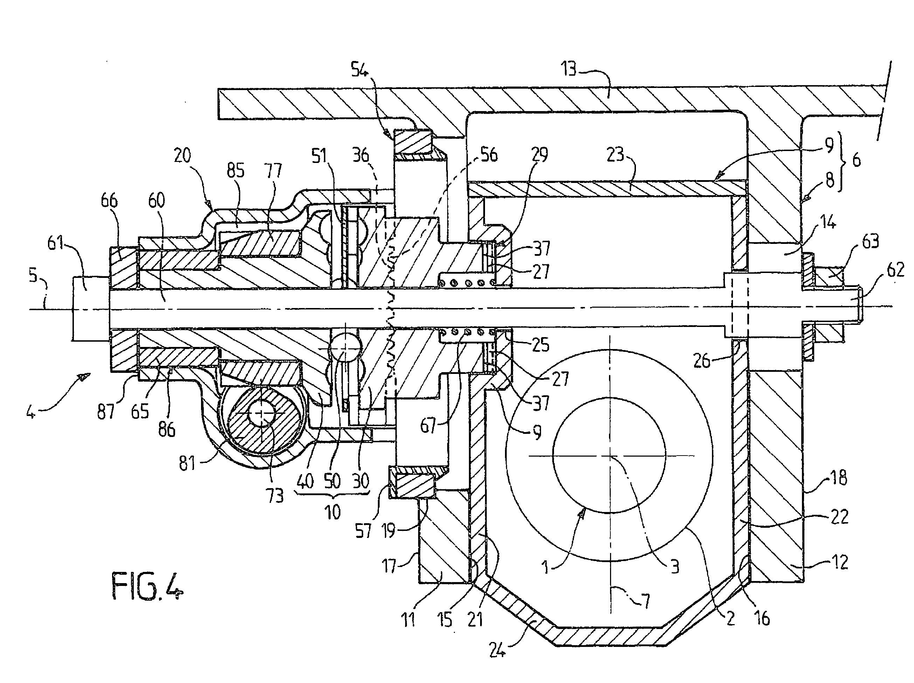

Comme on peut le voir sur les figures 1, 2, 3 et 4, l'invention se rapporte à un dispositif de serrage électrique d'une colonne de direction de véhicule automobile. Le dispositif de serrage électrique selon l'invention répond aux exigences actuelles demandées pour les véhicules automobiles. La colonne de direction est réglable en profondeur ou en hauteur, ou en profondeur et en hauteur.

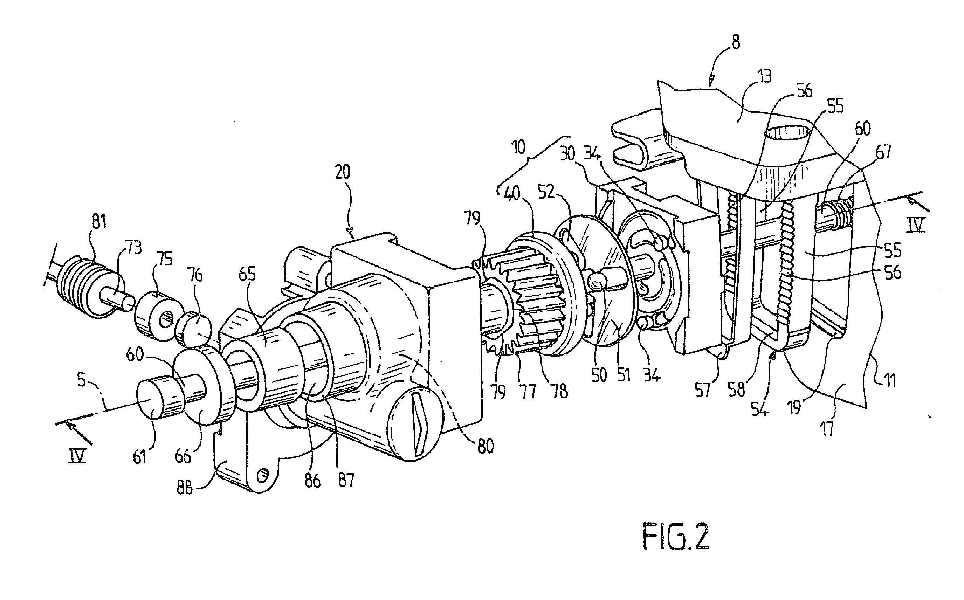

La colonne de direction comprend un arbre de direction 1, qui est monté tournant autour d'un axe de direction 3. L'arbre de direction 1 est monté dans un tube corps 2 appartenant à la partie haute de colonne de direction. L'arbre de direction porte à une de ses extrémités le volant de direction et est relié par son autre extrémité à l'arbre intermédiaire de la colonne. Les figures 1 et 2 sont vues du côté du volant de direction, c'est-à-dire du côté du conducteur. La colonne de direction est montée dans un ensemble support 6 qui est fixé à la structure du véhicule.

L'ensemble support 6 comporte un élément support fixe 8 et un élément support mobile 9. Le tube corps 2 est disposé dans l'élément support mobile 9. Ledit tube corps 2 est bloqué sur l'élément support fixe 8 en position verrouillée par un système de serrage 4. Ledit système de serrage 4 permet d'avoir une position déverrouillée de la colonne de direction, pour le réglage en hauteur et en profondeur. Le système de serrage 4 est disposé et agit suivant un axe de serrage 5, qui est sensiblement perpendiculaire au plan vertical 7 passant par l'axe de direction 3.

Pour le réglage en hauteur, c'est tout l'élément support mobile 9 avec le tube corps 2 et le système de serrage 4 qui se déplacent par rapport à l'élément support fixe 8. Pour le réglage en profondeur, c'est seulement le tube corps 2 avec l'élément support mobile 9 qui se déplacent par rapport à l'élément support fixe 8, le système de serrage 4 restant immobile.

L'élément support fixe 8 est constitué par deux montants 11 et 12, qui sont reliés par un élément de raccordement 13. Les deux montants 11 et 12 sont sensiblement verticaux, c'est-à-dire qu'ils sont sensiblement parallèles au plan vertical 7 passant par l'axe de direction. Dans la suite de description le plan vertical sera appelé plan vertical de direction 7. Le montant 11 comporte un trou oblong dans le sens vertical, qui est un logement 19 d'un cadre 54. Le montant 12 comporte un trou oblong 14 dans le sens vertical. Le logement 19 et le trou oblong 14 permettent le débattement vertical du système de serrage 4 pour le réglage en hauteur.

Dans la suite de la description et pour un même élément, on appellera interne ou intérieur par rapport à l'axe de direction 3 ou par rapport au plan vertical de direction 7, ce qui est le plus près de cet axe de direction 3 ou de ce plan de direction 7, et externe ou extérieur ce qui en est le plus éloigné.

Ainsi le montant 11 a une face interne 15 et une face externe 17 par rapport au plan de direction 7. De même, le montant 12 a une face interne 16 et une face externe 18 par rapport à ce même plan de direction 7. Lesdites faces 15, 16, 17 et 18 sont sensiblement parallèles au plan vertical de direction 7.

L'élément support mobile 9 est constitué par deux montants 21 et 22, qui sont reliés par un élément de raccordement 23 à la partie supérieure, et par un élément de fermeture 24 à la partie inférieure. Le montant 21 comporte un logement 29 et un trou oblong 25 dans le sens axial. Le montant 22 comporte un trou oblong 26 dans le sens axial. Le trou oblong 25 et le trou oblong 26 permettent le débattement axial de l'élément support mobile 9 pour le réglage en profondeur.

Le système de serrage 4 a une tige de serrage 60 dont l'axe est l'axe de serrage 5. Ladite tige de serrage 5 traverse les deux montants 11 et 12 de l'élément support fixe 8, et elle est bloquée sur l'élément support fixe 8 en position verrouillée. Le dispositif de serrage électrique d'une colonne de direction selon l'invention est monté dans un carter 20 qui supporte un actionneur électrique 70.

Le carter 20 comporte un système de transmission 80 et un ensemble de blocage 10, qui sont montés sur la tige de serrage 60. Ladite tige de serrage 60 traverse le carter 20 et supporte l'ensemble du dispositif de serrage électrique en se reposant sur les deux montants 11 et 12 de l'élément support fixe 8.

L'ensemble de blocage 10 consiste en une came fixe 30 en rotation par rapport à l'axe de serrage 5 et en une came mobile 40 en rotation par rapport audit axe de serrage 5.

L'actionneur électrique est un moteur électrique 70 dont l'axe est appelé axe moteur 71. L'axe moteur 71 est disposé dans un plan 72, qui est perpendiculaire à l'axe de serrage 5 et parallèle au plan vertical de direction 7.

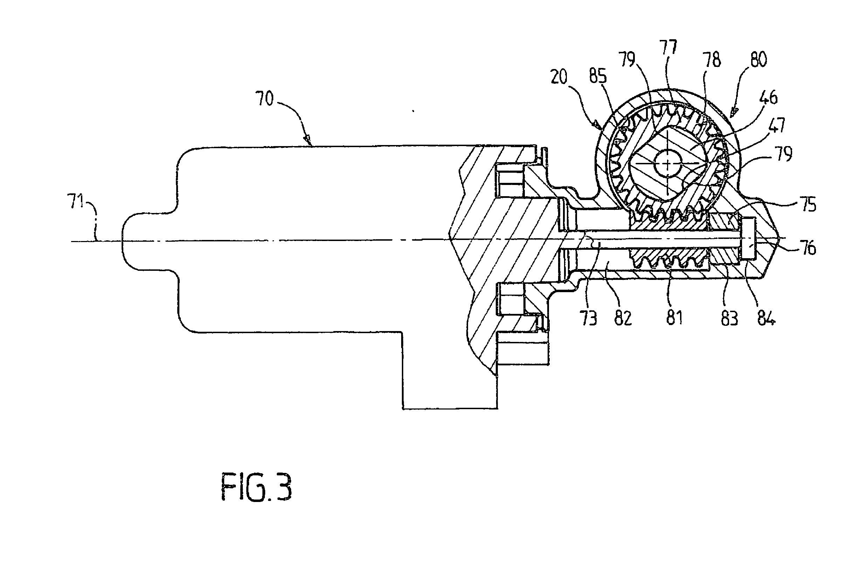

Comme cela est représenté plus particulièrement sur les figures 1 et 3, le système de transmission 80 est un système à roue et vis sans fin qui comprend une roue 77 et une vis sans fin 81.

La vis sans fin 81 et la roue 77 sont montées et disposées dans le carter 20. Le carter 20 comprend deux logements principaux 82 et 85. Le logement 82 est agencé pour la vis sans fin 81 et il se prolonge par deux logements 83 et 84 suivant l'axe moteur 71. Le logement 85 est agencé pour la roue 77 et il se prolonge par un logement 86 suivant l'axe de serrage 5.

La vis sans fin 81 est entraînée par le moteur électrique 70 et s'engrène avec la roue 77 qui entraîne la came mobile 40. Le carter 20 comprend également une bride 88 pour le montage du moteur électrique 70, qui comprend une bride 74 se fixant sur ladite bride 88.

Le moteur électrique 70 a un arbre moteur 73 qui supporte et entraîne la vis sans fin 81. L'arbre moteur 73 est supporté à son extrémité par un palier autolubrifiant 75 disposé et monté dans le logement 83. De plus une butée plastique 76 est montée sur l'extrémité de l'arbre moteur 73 et est montée et disposée dans le logement 84.

Comme cela est représenté sur les figures 1, 2, 3 et 4, l'ensemble de blocage 10 appartient au système de serrage 4 et comporte la came mobile 40, la came fixe 30 et un ou plusieurs éléments roulant 50 disposé entre la came fixe 30 et la came mobile 40. Les éléments roulants 50 sont des billes 50 qui sont maintenues en place par une cage 51. La came mobile 40, la cage 51 avec les billes 50, la came fixe 30 sont disposées dans le carter 20 et sont montées sur la tige de serrage 60. La roue 77 est montée sur un moyeu 46 de la came mobile 40. Deux méplats 47 agencés sur le moyeu 46 coopèrent avec deux méplats 79 agencés dans un trou 78 de la roue 77.

La tige de serrage 60 comporte à une de ses extrémités un élément de tenue axiale, qui est constitué par une tête 61 agencée directement sur ladite tige. L'autre extrémité de tige de serrage 60 est une extrémité filetée 62 sur laquelle est monté un élément de tenue axiale constitué par un écrou 63.

Du côté de la tête 61, la tige de serrage 60 est supportée à son extrémité par un palier autolubrifiant 65 qui est disposé dans le logement 86 du carter 20. De plus une butée à aiguilles 66 est disposée sur l'extrémité de la tige de serrage 60. Ladite butée à aiguilles 66 est disposée sur une face externe 87 du carter 20, elle s'applique contre la came mobile 40 et elle est maintenue en place par la tête 61 de la tige de serrage 60. Enfin, un ressort de rappel 67 est monté sur la tige de serrage 60 entre la came fixe 30 et le montant 21 de l'élément support mobile ; ce qui permet d'assurer la mise en contrainte du dispositif.

Ainsi le système de serrage 4 comporte la tige de serrage 60 sur laquelle sont montés : la butée à aiguilles 66, l'ensemble de blocage 10, le ressort de rappel 67 et l'écrou 63. La butée à aiguilles 66 est disposée entre la tête 61 de la tige de serrage 60 et la face externe 87 du carter 20. L'ensemble de blocage 10 est disposé dans le carter 20 et contre la face externe 17 du montant 11 de l'élément support fixe 8. Le ressort de rappel 67 est disposé entre la came fixe 30 de l'ensemble de blocage 10 et le montant 21 de l'élément support mobile 9. L'écrou 63 est monté sur l'extrémité filetée 62 de la tige de serrage 60, et il s'applique contre la face externe 18 du montant 12 de l'élément support fixe 8. De plus la tige de serrage 60 comporte deux méplats 64, qui coopèrent avec la largeur du trou oblong 14, qui est aménagé dans ledit montant 12 pour le réglage en hauteur.

Selon une caractéristique essentielle de l'invention, dans l'ensemble de blocage 10, l'élément roulant ou la bille 50 ou chaque élément roulant ou chaque bille 50 se déplace sur un chemin de roulement fixe 32 aménagé sur la came fixe 30 et sur un chemin de roulement mobile 42 aménagé sur la came mobile 40.

Chaque chemin de roulement 32, 42 a une pente de dégagement de l'élément roulant 50 ou de la bille 50 par rapport à la came correspondante 30, 40 : de manière qu'en tournant la came mobile 40 par rapport à la came fixe 30, les deux cames 30 et 40 s'écartent ou se rapprochent l'une de l'autre suivant le sens de rotation, afin d'obtenir la position verrouillée ou déverrouillée de la colonne de direction.

Selon une autre caractéristique essentielle de l'invention, la pente de dégagement des chemins de roulement 32, 42 a une valeur variable inférieure à la valeur liée au coefficient de frottement avec l'élément roulant.

Selon une autre caractéristique essentielle de l'invention, chaque chemin de roulement 32, 42 est une courbe qui possède un rayon variable par rapport à l'axe de serrage 5, de manière qu'en tournant la came mobile 40 par rapport à la came fixe 30, un ou plusieurs chemins de roulement 32, 42 n'interfèrent jamais avec lui-même ou avec les autres chemins de roulement.

Ainsi le déplacement axial de la came mobile 40 par rapport à la came fixe 30 est fonction de la rotation de la came mobile 40 et dépend à chaque instant de la position de l'élément roulant ou de la bille 50 ou des éléments roulants 50 ou des billes 50 par rapport à l'axe de serrage 5 et de la pente de dégagement des chemins de roulement 32, 42 pour ladite position.

Selon un mode de réalisation de l'invention l'ensemble de blocage 10 comporte deux éléments roulants 50, ou deux billes 50, chaque élément roulant 50 ou chaque bille 50 se déplaçant sur un chemin de roulement fixe 32 et sur un chemin de roulement mobile 42 correspondants.

Selon un autre mode de réalisation de l'invention qui est celui représenté sur les figures, l'ensemble de blocage 10 comporte trois éléments roulants 50 ou trois billes 50, chaque élément roulant 50 ou chaque bille 50 se déplaçant sur un chemin de roulement fixe 32 et sur un chemin de roulement mobile 42 correspondants.

Afin d'améliorer le fonctionnement du dispositif de serrage électrique selon l'invention, un élément d'amortissement 34, 44 est disposé dans un logement 33, 43 aménagé à l'extrémité périphérique de chacun des chemins de roulement fixes 32 et de chacun des chemins de roulement mobiles 42.

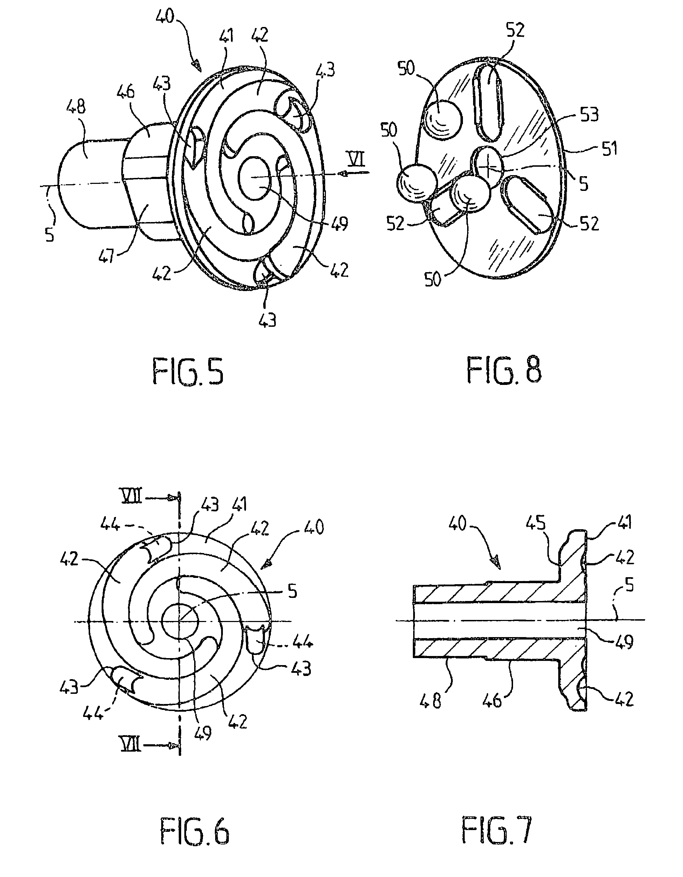

La structure de la came mobile 40 est représentée en détail sur les figures 5, 6 et 7. La came mobile 40 est constituée par un plateau transversal par rapport à l'axe de serrage 5, qui se prolonge par un moyeu 46 et un tourillon 48. Le moyeu 46 possède deux méplats 47 afin de recevoir la roue 77, qui se monte à l'aide du trou 78 et des deux méplats 79. L'ensemble se monte dans le carter 20 à l'aide du tourillon 48 dans le palier autolubrifiant 65. La came mobile 40 est montée libre en rotation sur la tige de serrage 60 au moyen d'un trou de passage 49.

Le plateau transversal est perpendiculaire à l'axe de serrage 5. Le plateau transversal possède une face externe 45, qui s'applique contre la roue 77, et une face interne 41 munie des trois chemins de roulement mobiles 42. Chaque chemin de roulement mobile 42 est une courbe qui possède un rayon variable par rapport à l'axe de serrage 5, et qui a la forme d'une spirale commençant près de l'axe de serrage 5 ; les trois chemins de roulement mobiles 42 étant décalés angulairement de cent vingt degrés. Un élément d'amortissement 44 est disposé dans un logement 43, qui est aménagé à l'extrémité périphérique de chacun des chemins de roulement mobiles 42. Chaque chemin de roulement mobile à une pente de dégagement de la bille correspondante 50 par rapport à la face interne 41. Ladite pente de dégagement a une valeur variable, qui est toujours inférieure à la valeur liée au coefficient de frottement avec la bille 50, qui doit rouler sans glissement.

La cage à billes 51 est un plateau transversal représenté sur la figure 8 et monté libre en rotation sur la tige de serrage 60 au moyen d'un trou de passage 53. La cage à billes 51 possède trois trous oblongs 52, qui ont une direction radiale et qui sont décalés de cent vingt degrés, afin de permettre le débattement des billes 50.

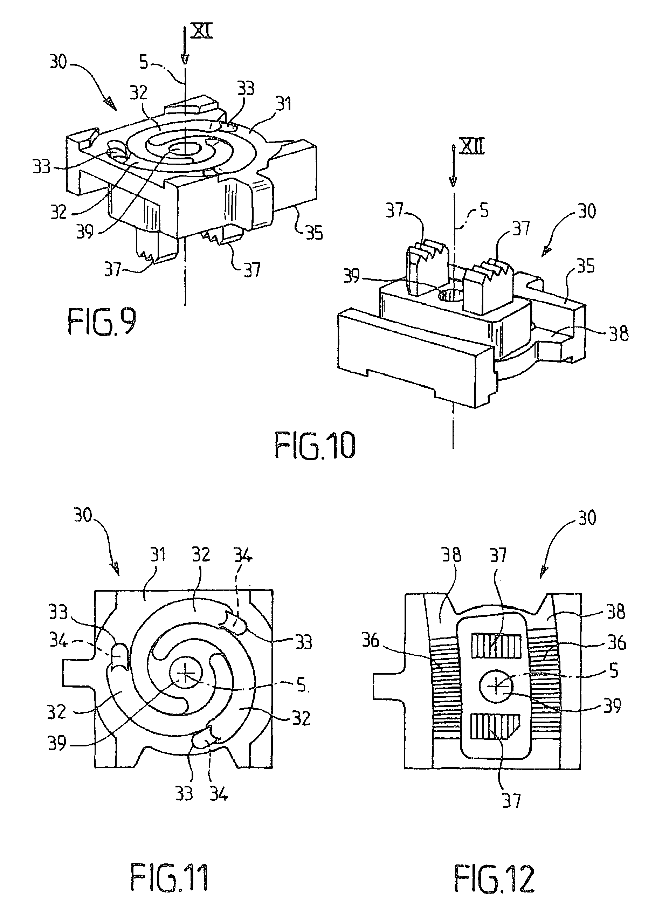

La structure de la came fixe 30 est représentée en détails sur les figures 9, 10, 11 et 12. La came fixe 30 est constituée par un plateau transversal par rapport à l'axe de serrage 5, qui a une forme rectangulaire. La came fixe 30 est montée libre en rotation sur la tige de serrage 60 au moyen d'un trou de passage 39. La came fixe 30 se monte et s'engage dans le carter 20.

Le plateau transversal est perpendiculaire à l'axe de serrage 5. Le plateau transversal possède une face interne 35, qui s'applique contre le montant 11 de l'élément support fixe 8, et une face externe 31 munie des trois chemins de roulement fixes 32. Chaque chemin de roulement fixe 32 est une courbe qui possède un rayon variable par rapport à l'axe de serrage 5, et qui a la forme d'une spirale commençant près de l'axe de serrage 5 ; les trois chemins de roulement fixes 32 étant décalés angulairement de cent vingt degrés.

Un élément d'amortissement 34 est disposé dans un logement 33, qui est aménagé à l'extrémité périphérique de chacun des chemins de roulement fixes 32. Chaque chemin de roulement fixe a une pente de dégagement de la bille correspondante 50 par rapport à la face externe 31. Ladite pente de dégagement a une valeur variable, qui est toujours inférieure à la valeur liée au coefficient de frottement avec la bille 50, qui doit rouler sans glissement.

La came fixe 30 comporte deux crémaillères radiales mobiles en hauteur 36 et deux crémaillères axiales fixes 37. La came fixe 30 est fixe en rotation par rapport à l'axe de serrage 5 et elle est fixe dans le sens axial suivant l'axe de direction 3. La came fixe 30 est mobile en hauteur pour le réglage radial ou en hauteur. Les deux crémaillères radiales mobiles 36 sont disposées dans le fond de deux encoches 38 de la face interne 35 de la came fixe 30. Les deux crémaillères axiales fixes 37 sont agencées sur deux proéminences de la face interne 35.

Les deux crémaillères radiales mobiles 36 coopèrent avec deux crémaillères radiales fixes 56, qui sont agencées sur les deux montants 55 d'un cadre 54. Le cadre 54 est disposé dans le logement 19 du montant 11 de l'élément support fixe. De plus un patin en plastique 57 ayant la forme d'un cadre vient s'engager et se fixer dans ledit cadre 54, afin de faciliter le coulissement en hauteur de la came fixe 30. Les deux encoches 38 reçoivent ainsi les deux montants 55, ce qui immobilise en rotation la came fixe 30.

Les deux crémaillères axiales fixes 37 coopèrent avec deux crémaillères axiales mobiles 27, qui sont agencées dans le fond d'un logement 29 aménagé dans le montant 21 de l'élément support mobile 9. Le ressort de rappel 67 est disposé dans un logement de la came fixe 30. Le ressort de rappel 67 s'appuie entre le fond de ce logement et le fond du logement 29.

Ainsi la came fixe 30 s'engage et est immobilisée en rotation dans le carter 20, ladite came fixe 30 étant immobilisée en rotation dans le cadre crémaillère 54 fixé dans l'élément support fixe 8, ce qui empêche toute rotation dudit carter 20 par rapport à l'axe de serrage 5.

La cinématique de l'invention est ainsi décrite ci-après. Le moteur électrique 70 fixe par rapport au carter 20 entraine la vis sans fin 81. Cette dernière est en couple avec une roue dentée 77 afin d'adapter la vitesse de rotation du moteur électrique 70 au système de cames à billes. Afin de reprendre les efforts transversaux et axiaux, dans la vis sans fin 81, dues au fonctionnement du réducteur, un palier autolubrifiant 75 est intégré dans le carter 20 ainsi qu'une butée plastique 76. La vis sans fin 81 transmet la puissance du moteur électrique 70 à la roue dentée 77 qui est solidaire de la came mobile 30. Pour les mêmes raisons décrites ci-dessus, un palier autolubrifiant 65 guide en rotation la came mobile 30. La came mobile 30 est en couple avec la came fixe 40 ; elles sont séparées par les billes 50. En tournant, la came mobile 30 entraine les billes 50 sur les chemins de roulement 32 et 42 et contraint ainsi la came fixe 40 à se déplacer axialement. Ce déplacement axial permet le verrouillage de la colonne. Afin de garder les billes 50 synchronisées, une cage à billes 51 est nécessaire. Le verrouillage de la colonne est actionné par le fait que la came mobile 30 empêche le déplacement axial de la butée à aiguilles 66 qui a pour fonction d'empêcher le déplacement de la tige de serrage 60 tout en permettant la rotation de la came mobile 30. Le système de came à billes augmente son épaisseur axiale contraignant ainsi les éléments de la colonne à se serrer entre eux afin de verrouiller la possibilité d'ajustement de la colonne.

## Revendications

1. Dispositif de serrage électrique d'une colonne de direction réglable en profondeur et/ou en hauteur de véhicule automobile qui comporte un arbre de direction (1) monté tournant autour d'un axe de direction (3) dans un tube-corps (2), ladite colonne de direction étant montée dans un ensemble support (6) comportant un élément support fixe (8) constitué par deux montants (11, 12) et un élément de raccordement (13) et un élément support mobile (9), ledit tube-corps (2) étant disposé dans l'élément support mobile (9) et bloqué sur l'élément support fixe (8), en position verrouillée, par un système de serrage (4) selon un axe de serrage (5) sensiblement perpendiculaire au plan vertical de direction (7) passant par l'axe de direction (3), ledit système de serrage (4) ayant une tige de serrage (60), dont l'axe est l'axe de serrage (5) et qui traverse les deux montants (11, 12) de l'élément support fixe (8), ledit dispositif de serrage électrique comportant:
- un ensemble de blocage (10), appartenant au système de serrage (4) et monté sur la tige de serrage (60), qui consiste en une came fixe (30) en rotation par rapport à l'axe de serrage (5), une came mobile (40) en rotation et au moins un élément roulant (50) disposé entre la came fixe (30) et la came mobile (40) ;
- l'élément roulant (50), ou chaque élément roulant (50) se déplaçant sur un chemin de roulement fixe (32) aménagé sur la came fixe (30), et sur un chemin de roulement mobile (42) aménagé sur la came mobile (40),
- chaque chemin de roulement (32, 42) a une pente de dégagement de l'élément roulant (50) par rapport à la came correspondante (30, 40),
- de manière qu'en tournant la came mobile (40) par rapport à la came fixe (30), les deux cames (30, 40) s'écartent ou se rapprochent l'une de l'autre suivant le sens de rotation, afin d'obtenir la position verrouillée ou déverrouillée de la colonne de direction,
- ladite pente de dégagement des chemins de roulement (32, 42) a une valeur variable inférieure à la valeur liée au coefficient de frottement avec l'élément roulant,
- chaque chemin de roulement (32, 42) est une courbe qui possède un rayon variable par rapport à l'axe de serrage (5), de manière qu'en tournant la came mobile (40) par rapport à la came fixe (30), un ou plusieurs chemins de roulement (32, 42) n'interfèrent jamais avec lui-même ou avec les autres chemins de roulement,
- le déplacement axial de la came mobile (40) par rapport à la came fixe (30) étant fonction de la rotation de la came mobile (40) et dépendant à chaque instant de la position de l'élément roulant (50) ou des éléments roulants (50) par rapport à l'axe de serrage (5) et de la pente de dégagement des chemins de roulement (32, 42) pour ladite position.

2. Dispositif de serrage selon la revendication 1, **caractérisé en ce que** l'ensemble de blocage (10) comporte deux éléments roulants (50), chaque élément roulant (50) se déplaçant sur un chemin de roulement fixe (32) et sur un chemin de roulement mobile (42) correspondants.

3. Dispositif de serrage selon la revendication 1, **caractérisé en ce que** l'ensemble de blocage (10) comporte trois éléments roulants (50), chaque élément roulant (50) se déplaçant sur un chemin de roulement fixe (32) et sur un chemin de roulement mobile (42) correspondants.

4. Dispositif de serrage selon l'une quelconque des revendications 1 à 3, **caractérisé en ce que** le ou les éléments roulants (50) sont maintenus en place par une cage (51).

5. Dispositif de serrage selon l'une quelconque des revendications précédentes, **caractérisé en ce que** les éléments roulants sont des billes (50).

6. Dispositif de serrage selon la revendication 1, **caractérisé en ce qu'**un élément d'amortissement (34, 44) est disposé dans un logement (33, 43) aménagé à l'extrémité périphérique de chacun des chemins de roulement fixes (32) et de chacun des chemins de roulement mobiles (42).

7. Dispositif de serrage selon l'une quelconque des revendications précédentes, **caractérisé en ce que** ledit dispositif de serrage électrique est monté dans un carter (20) qui supporte un actionneur électrique (70), et qui comporte : un système de transmission (80), l'ensemble de blocage (10) et la tige de serrage (60) qui traverse les deux montants (11, 12) de l'élément support fixe (8).

8. Dispositif de serrage selon la revendication 7, **caractérisé en ce que** :
- l'actionneur électrique est un moteur électrique (70) dont l'axe (71) est disposé dans un plan (72) perpendiculaire à l'axe de serrage (5) et parallèle au plan vertical de direction (7);
- le système de transmission (80) comprend une roue (77) et une vis sans fin (81) montées dans le carter (20), la vis sans fin (81) étant entrainée par le moteur électrique(70) et s'engrenant avec la roue (77) solidaire de la came mobile (40) montée sur la tige de serrage (60).

9. Dispositif de serrage selon la revendication 8, **caractérisé en ce que** l'arbre (73) du moteur électrique (70) qui entraîne la vis sans fin (81), est supporté à son extrémité par un palier autolubrifiant (75) disposé dans le carter (20).

10. Dispositif de serrage selon la revendication 9, **caractérisé en ce que** le carter (20) comporte une butée plastique (76) disposée à l'extrémité de l'arbre moteur (73).

11. Dispositif de serrage selon la revendication 7, **caractérisé en ce que** l'ensemble de blocage (10) comporte la came mobile (40), la cage (51) et la came fixe (30), qui sont disposées dans le carter (20), et qui sont montées sur la tige de serrage (60), la roue (77) étant montée sur un moyeu (46) de la came mobile (40) et solidaire du moyeu (46) en rotation par l'agencement de méplats (47, 79).

12. Dispositif de serrage selon la revendication 11, **caractérisé en ce que** la tige de serrage (60) est supportée à son extrémité par un palier autolubrifiant (65) disposé dans le carter (20).

13. Dispositif de serrage selon la revendication 12, **caractérisé en ce qu'**une butée à aiguilles (66) est disposée sur l'extrémité de la tige de serrage (60), ladite butée à aiguilles (66) étant disposée sur une face externe (87) du carter (20), s'appliquant contre la came mobile (40), et étant maintenue en place par un élément de tenue axiale constitué par une tête (61) agencée sur la tige de serrage (60).

14. Dispositif de serrage selon la revendication 13, **caractérisé en ce qu'**un ressort de rappel (67) est monté sur la tige de serrage (60) entre la came fixe (30) et l'élément support mobile (9) afin d'assurer la mise en contrainte du dispositif.

15. Dispositif de serrage selon la revendication 14, **caractérisé en ce que** le système de serrage (4) comporte la tige de serrage (60) sur laquelle sont montés :
- la butée à aiguilles (66) disposée entre la tête (61) de la tige de serrage (60) et le carter (20),
- l'ensemble de blocage (10) disposé dans le carter (20) et contre la face externe (17) d'un montant (11) de l'élément support fixe (8),
- le ressort de rappel (67) disposé entre la came fixe (30) de l'ensemble de blocage (10) et l'élément support mobile (9),
- un élément de tenue axiale constitué par un écrou (63) monté sur l'extrémité filetée (62) de la tige de serrage (60), et s'appliquant contre la face externe (18) de l'autre montant (12) de l'élément support fixe (8),
- la tige de serrage (60) ayant deux méplats (64) qui coopèrent avec la largeur du trou oblong (14) aménagé dans ledit montant (12) pour le réglage en hauteur.

16. Dispositif de serrage selon la revendication 15, **caractérisé en ce que** la came fixe (30) comporte deux crémaillères radiales mobiles en hauteur (36) et deux crémaillères axiales fixes (37), les deux crémaillères radiales mobiles (36) coopérant avec deux crémaillères radiales fixes (56) agencées sur les montants (55) d'un cadre (54) logé dans le montant (11) de l'élément support fixe (8), et les deux crémaillères axiales fixes (37) coopérant avec deux crémaillères axiales mobiles (27) agencées sur un montant (21) de l'élément support mobile (9); les deux crémaillères radiales mobiles (36) étant disposées dans le fond de deux encoches (38) de la came fixe (30) qui reçoivent les deux montants (55) du cadre (54) ; et un patin en plastique (57) étant fixé dans ledit cadre (54) pour faciliter le coulissement.

## Claims

1. An electric clamping device for a steering column adjustable in depth and/or in height of an automotive vehicle, that includes a steering shaft (1) rotatably mounted about a steering axis (3) in a body tube (2), said steering column being mounted in a support assembly (6) including a fixed support member (8) made up of two uprights (11, 12) and a connecting member (13), and a movable support member (9), said body tube (2) being arranged in the movable support member (9) and immobilized on the fixed support member (8), in a locked position, by a clamping system (4) along a clamping axis (5) substantially perpendicular to the vertical steering plane (7) passing through the steering axis (3), said clamping system (4) having a clamping rod (60), whose axis is the clamping axis (5) and which passes through the two uprights (11, 12) of the fixed support member (8), said electric clamping device including:
- an immobilizing assembly (10), belonging to the clamping system (4) and mounted on the clamping rod (60), which consists in a cam (30) rotationally fixed with respect to the clamping axis (5), a rotationally movable cam (40) and at least one rolling member (50) arranged between the fixed cam (30) and the movable cam (40);
- the rolling member (50) or each rolling member (50) moving on a fixed rolling path (32) arranged on the fixed cam (30), and on a movable rolling path (42) arranged on the movable cam (40),
- each rolling path (32, 42) has an escape slope for the rolling member (50) with respect to the corresponding cam (30, 40),
- so that while rotating the movable cam (40) with respect to the fixed cam (30), the two cams (30, 40) move apart or closer one relative to the other according to the rotation direction, so as to reach the locked or unlocked position of the steering column,
- said escape slope of the rolling paths (32, 42) has a varying value less than the value linked to the friction coefficient for the rolling member (50),
- each rolling path (32, 42) is a curve that has a radius varying with respect to the clamping axis (5), so that while rotating the movable cam (40) with respect to the fixed cam (30), one or more rolling paths (32, 42) never interfere with itself or with the other rolling paths,
- the axial movement of the movable cam (40) with respect to the fixed cam (30) being a function of the rotation of the movable cam (40) and depending, at every moment, on the position of the rolling member (50) or rolling members (50) with respect to the clamping axis (5) and on the escape slope of the rolling paths (32, 42) for said position.

2. A clamping device according to claim 1, **characterized in that** the immobilizing assembly (10) includes two rolling members (50), each rolling member (50) moving on corresponding fixed rolling path (32) and movable rolling path (42).

3. A clamping device according to claim 1, **characterized in that** the immobilizing assembly (10) includes three rolling members (50), each rolling member (50) moving on corresponding fixed rolling path (32) and movable rolling path (42).

4. A clamping device according to any one of claims 1 to 3, **characterized in that** the rolling member or the rolling members (50) are maintained in place by a cage (51).

5. A clamping device according to any one of previous claims, **characterized in that** the rolling members are balls (50).

6. A clamping device according to claim 1, **characterized in that** a clamping member (34, 44) is arranged in a housing (33, 43) arranged at the peripheral end of each of the fixed rolling paths (32) and each of the movable rolling paths (42).

7. A clamping device according to any one of previous claims, **characterized in that** said electric clamping device is mounted in a casing (20) that supports an electric actuator (70), and that includes: a transmission system (80), the immobilizing assembly (10) and the clamping rod (60) that passes through the two uprights (11, 12) of the fixed support member (8).

8. A clamping device according to claim 7, **characterized in that**:
- the electric actuator is an electric motor (70), the axis (71) of which is located in a plane (72) perpendicular to the clamping axis (5) and parallel to the vertical steering plane (7);
- the transmission system (80) includes a wheel (77) and an endless screw (81) mounted in the casing (20), the endless screw (81) being driven by the electric motor (70) and meshing into the wheel (77) integral with the movable cam (40) mounted on the clamping rod (60).

9. A clamping device according to claim 8, **characterized in that** the shaft (73) of the electric motor (70) that drives the endless screw (81) is supported at its end by a self-lubricating bearing (75) arranged in the casing (20).

10. A clamping device according to claim 9, **characterized in that** the casing (20) contains a plastic abutment (76) arranged at the end of the driving shaft (73).

11. A clamping device according to claim 7, **characterized in that** the immobilizing assembly (10) includes the movable cam (40), the cage (51) and the fixed cam (30) that are arranged within the casing (20) and that are mounted on the clamping rod (60), the wheel (77) being mounted on a hub (46) of the movable cam (40) and rotationally integral with the hub (46) by a flat portion arrangement (47, 79).

12. A clamping device according to claim 11, **characterized in that** the clamping rod (60) is supported at its end by a self-lubricating bearing (65) arranged in the casing (20).

13. A clamping device according to claim 12, **characterized in that** an abutment (66) with needles is provided on the end of the clamping rod (60), said needle abutment (66) being arranged on an external face (87) of the casing (20), resting against the movable cam (40), and being maintained in place by an axial holding member made up of a head (61) arranged on the clamping rod (60).

14. A clamping device according to claim 13, **characterized in that** a return spring (67) is mounted on the clamping rod (60) between the fixed cam (30) and the movable support member (9) in order to ensure that the device is under constraint.

15. A clamping device according to claim 14, **characterized in that** the clamping system (4) includes the clamping rod (60) on which there are mounted:
- the needle abutment (66) arranged between the head of the clamping rod (60) and the casing (20),
- the immobilizing assembly (10) arranged in the casing (20) and against the external face (17) of a upright (11) of the fixed support member (8),
- the return spring (67) arranged between the fixed cam (30) of the immobilizing assembly (10) and the movable support member (9),
- an axial holding member made of a nut (63) mounted on the threaded end (62) of the clamping rod (60), and resting against the external face of the other upright (12) of the fixed support member (8),
- the clamping rod (60) having two flat portions (64) that cooperates with the width of the oblong hole (14) provided in said upright (12) for the height adjustment.

16. A clamping device according to claim 15, **characterized in that** the fixed cam (30) includes two in-height movable radial racks (36) and two fixed axial racks (37), the two movable radial racks (36) cooperating with two fixed radial racks (56) arranged on the uprights (55) of a frame (54) housed in the upright (11) of the fixed support member (8), and the two fixed axial racks (37) cooperating with two movable axial racks (27) arranged on an upright (21) of the movable support member (9); the two movable radial racks (36) being arranged in the bottom of two notches (38) of the fixed cam (30) that accommodate the two uprights (55) of the frame (54); and a plastic pad (57) being fixed in said frame (54) for making sliding easier.

## Patentansprüche

1. Elektrische Verriegelungsvorrichtung einer in der Tiefe und/oder in der Höhe einstellbaren Lenksäule eines Kraftfahrzeugs, die eine Lenkwelle (1) umfasst, die drehend um eine Lenkachse (3) in einem Rohr (2) montiert ist, wobei die Lenksäule in einer Trägeranordnung (6) montiert ist, umfassend ein festes Trägerelement (8), bestehend aus zwei Säulen (11, 12) und einem Verbindungselement (13) und einem beweglichen Trägerelement (9), wobei das Rohr (2) in dem beweglichen Trägerelement (9) angebracht ist und in der verriegelten Position auf dem festen Trägerelement (8) durch ein System zur Verriegelung (4) entlang einer Verriegelungsachse (5), die im Wesentlichen senkrecht zur vertikalen Lenkebene (7) ist, die durch die Lenkachse (3) verläuft, blockiert ist, wobei das System zur Verriegelung (4) einen Verriegelungsschaft (60) aufweist, dessen Achse die Verriegelungsachse (5) ist, und der die zwei Säulen (11, 12) des festen Trägerelements (8) durchquert, wobei die Vorrichtung zur elektrischen Verriegelung folgendes umfasst:
- eine Blockieranordnung (10), die zum Verriegelungssystem (4) gehört und auf dem Verriegelungsschaft (60) montiert ist, der aus einen festen Nocken (30) umfasst, der sich bezüglich der Verriegelungsachse (5) dreht, und einen beweglichen Nocken (40), der sich dreht, und zumindest ein Rollelement, das zwischen dem festen Nocken (30) und dem beweglichen Nocken (40) angebracht ist;
- wobei sich das Rollelement (50) oder jedes Rollelement (50) auf einem festen Rollweg (32) bewegt, der auf dem festen Nocken (30) angeordnet ist, und auf eine beweglichen Rollweg (42) der auf dem beweglichen Nocken (40) angeordnet ist,
- wobei jeder Rollweg (32, 42) eine Neigung zur Freigabe des Rollelements (50) bezüglich des entsprechenden Nockens (30, 40) aufweist,
- so dass, wenn sich der bewegliche Nocken (40) bezüglich des festen Nockens (30) dreht, sich die zwei Nocken (30, 40) in der Drehrichtung voneinander entfernen oder sich einander annähern, um die verriegelte oder entriegelte Position der Lenksäule zu erreichen,
- wobei die Neigung zur Freigabe der Rollwege (32, 42) einen variablen Wert aufweist, der geringer als der Wert ist, der mit dem Koeffizienten der Reibung mit dem Rollelement verbunden ist,
- wobei jeder Rollweg (32, 42) eine Kurve ist, die einen variablen Radius bezüglich der Verriegelungsachse (5) aufweist, so dass durch das Drehen des beweglichen Nockens (40) bezüglich des festen Nockens (30) sich ein oder mehrere Rollwege (32, 42) nie mit sich selbst oder mit den anderen Rollwegen überlagern,
- wobei die axiale Verschiebung des beweglichen Nockens (40) bezüglich des festen Nockens (30) eine Funktion der Drehung des beweglichen Nockens (40) ist und zu jedem Zeitpunkt von der Position des Rollelements (50) oder der Rollelemente (50) bezüglich der Verriegelungsachse (5) und der Neigung zur Freigabe der Rollwege (32, 42) für die Position abhängt.

2. Verriegelungsvorrichtung nach Anspruch 1, **dadurch gekennzeichnet, dass** die Blockieranordnung (10) zwei Rollelemente (50) umfasst, wobei sich jedes Rollelement (50) auf einem entsprechenden festen Rollweg (32) und auf einem entsprechenden beweglichen Rollweg (42) bewegt.

3. Verriegelungsvorrichtung nach Anspruch 1, **dadurch gekennzeichnet, dass** die Blockieranordnung (10) drei Rollelemente (50) umfasst, wobei sich jedes Rollelement (50) auf einem entsprechenden festen Rollweg (32) und auf einem entsprechenden beweglichen Rollweg (42) bewegt.

4. Verriegelungsvorrichtung nach einem der Ansprüche 1 bis 3, **dadurch gekennzeichnet, dass** das oder die Rollelemente (50) von einem Gehäuse (51) in ihrer Position gehalten werden.

5. Verriegelungsvorrichtung nach einem der vorhergehenden Ansprüche, **dadurch gekennzeichnet, dass** die Rollelemente Kugeln (50) sind.

6. Verriegelungsvorrichtung nach Anspruch 1, **dadurch gekennzeichnet, dass** ein Dämpfungselement (34, 44) in einem Lager (33, 43) angebracht ist, das am peripheren Ende jedes der festen Rollwege (32) und jedes der beweglichen Rollwege (42) angebracht ist.

7. Verriegelungsvorrichtung nach einem der vorhergehenden Ansprüche, **dadurch gekennzeichnet, dass** die elektrische Verriegelungsvorrichtung in einem Gehäuse (20) montiert ist, das ein elektrisches Betätigungsgerät (70) trägt, und das folgendes umfasst: ein Übertragungssystem (80), die Blockieranordnung (10) und den Verriegelungsschaft (60), der die zwei Säulen (11, 12) des festen Trägerelements (8) durchquert.

8. Verriegelungsvorrichtung nach Anspruch 7, **dadurch gekennzeichnet, dass**:
- das elektrische Betätigungsgerät ein elektrischer Motor (70) ist, dessen Achse (71) in einer Ebene (72) angeordnet ist, die senkrecht zur Verriegelungsachse (5) und parallel zum vertikalen Lenkebene (7) ist.
- das Übertragungssystem (80) ein Rad (77) und eine Endlosschraube (81) umfasst, die im Gehäuse (20) montiert sind, wobei die Endlosschraube (81) vom elektrische Motor (70) angetrieben wird und mit dem Rad (77) eingreift, das mit dem bewegliche Nocken (40) einstückig ist, der auf dem Verriegelungsschaft (60) montiert ist.

9. Verriegelungsvorrichtung nach Anspruch 8, **dadurch gekennzeichnet, dass** die Welle (73) des elektrische Motors (70), der die Endlosschraube (81) antreibt, an ihrem Ende von einem selbstschmierenden Lager (75) getragen wird, das im Gehäuse (20) angebracht ist.

10. Verriegelungsvorrichtung nach Anspruch 9, **dadurch gekennzeichnet, dass** das Gehäuse (20) einen Plastiklager (76) umfasst, der am Ende der Motorwelle (73) angebracht ist.

11. Verriegelungsvorrichtung nach Anspruch 7, **dadurch gekennzeichnet, dass** die Blockieranordnung (10) den beweglichen Nocken (40), das Gehäuse (51) und den festen Nocken (30) umfasst, die im Gehäuse (20) angebracht sind, und die auf dem Verriegelungsschaft (60) montiert sind, wobei das Rad (77) auf einem Nabenstück (46) des bewegliche Nockens (40) montiert ist und einstückig mit dem Nabenstück (6) ist, das sich durch die Anordnung von Flachstellen (47, 79) dreht.

12. Verriegelungsvorrichtung nach Anspruch 11, **dadurch gekennzeichnet, dass** der Verriegelungsschaft (60) an seinem Ende von einem selbstschmierenden Lager (65) getragen wird, das im Gehäuse (20) angebracht ist.

13. Verriegelungsvorrichtung nach Anspruch 12, **dadurch gekennzeichnet, dass** ein Axialnadellager (66) auf dem Ende des Verriegelungsschafts (60) angebracht ist, wobei das Axialnadellager (66) auf einer Außenseite (87) des Gehäuses (20) angebracht ist, die gegen den beweglichen Nocken (40) gedrückt wird und durch ein axiales Haltungselement, umfassend einen Kopf (61), der auf dem Verriegelungsschaft (60) angeordnet ist, in seiner Position gehalten wird.

14. Verriegelungsvorrichtung nach Anspruch 13, **dadurch gekennzeichnet, dass** eine Rückstellfeder (67) auf dem Verriegelungsschaft (60) zwischen dem festen Nocken (30) und dem beweglichen Trägerelement (9) montiert ist, um die Spannung der Vorrichtung sicherzustellen.

15. Verriegelungsvorrichtung nach Anspruch 14, **dadurch gekennzeichnet, dass** das Verriegelungssystem (4) einen Verriegelungsschaft (60) umfasst, auf dem folgendes montiert ist:
- das Axialadellager (66) zwischen dem Kopf (61) des Verriegelungsschafts (60) und dem Gehäuse (20),
- die Blockierungsanordnung (10), angeordnet im Gehäuse (20) und gegen die Außenseite (17) einer Säule (11) des festen Trägerelements (8).
- die Rückstellfeder (67), angebracht zwischen dem festen Nocken (30) der Blockierungsanordnung (10) und dem beweglichen Trägerelement (9),
- ein axiales Halterungselement, bestehend aus einer Schraubenmutter (63), die auf dem mit einem Gewinde versehenen Ende (62) des Verriegelungsschafts (60) angebracht ist und gegen die Außenseite (18) der anderen Säule (12) des festen Trägerelements (8) gedrückt ist,
- den Verriegelungsschaft (60), umfassend zwei Flachstellen (64), die mit der Breite des länglichen Lochs (14) zusammenarbeiten, das in der Säule (12) angeordnet ist, um die Höhe einzustellen.

16. Verriegelungsvorrichtung nach Anspruch 15, **dadurch gekennzeichnet, dass** der feste Nocken (30) zwei radiale, in der Höhe bewegliche Zahnstangen (36) umfasst sowie zwei feste axiale Zahnstangen (37), wobei die zwei beweglichen radialen Zahnstangen (36) mit zwei festen radialen Zahnstangen (56) zusammenarbeiten, die auf den Säulen (55) eines Rahmens (54) angebracht sind, der in der Säule (11) des festen Trägerelements (8) gelagert ist, und wobei die zwei festen axialen Zahnstangen (37) mit zwei beweglichen axialen Zahnstangen (27) zusammenarbeiten, die auf einer Säule (21) des beweglichen Trägerelements (9) angeordnet sind; wobei die zwei beweglichen radialen Zahnstangen (36) auf dem Grund von zwei Schlitzen (38) des festen Nockens (30) angebracht sind, die die zwei Säulen (55) des Rahmens (54) aufnehmen; und wobei ein Gleitschuh aus Plastik (57) in dem Rahmen (54) befestigt ist, um das Gleiten zu erleichtern.
